# EUROPEAN PATENT APPLICATION

(11) **EP 4 210 416 A1**
(43) Date of publication of application: **12.07.2023**
(21) Application number: 20951884.4
(22) Date of filing: 01.09.2020
(51) Int. Cl.: H04W 74/00

(54) **MULTI-CONNECTION COMMUNICATION METHOD AND COMMUNICATION DEVICE**

(71) Applicant: Beijing Xiaomi Mobile Software Co., Ltd., Beijing 100085 (CN)
(72) Inventor: DONG, Xiandong, Beijing 100085 (CN)
(74) Representative: dompatent von Kreisler Selting Werner - Partnerschaft von Patent- und Rechtsanwälten mbB
(86) International application number: PCT/CN2020/112912
(87) International publication number: WO 2022/047636

(57) **Abstract**

The present disclosure provides a multi-connection communication method and communication device. The communication method comprises: determining a first message frame, the first message frame comprising wake up information indicating a wake up state of one or more connections, wherein the wake up information is used to identify a corresponding connection to wake up and receive a cached downlink data frame; sending the first message frame. The present technical solution is capable of reducing signaling overhead, so that the device communicates under multiple connections, thereby improving network throughput.

## Description

### TECHNICAL FIELD

The disclosure relates to the communication field, in particular to a method for communication on multiple links and a communication apparatus.

### BACKGROUND

In May 2018, Institute of Electrical and Electronic Engineers (IEEE) established study group (SG) IEEE802.11be to study a next generation (IEEE802.11a/b/g/n/ac) Wi-Fi technology. The scope of the study is bandwidth transmission of 320MHz, aggregation and coordination of multiple frequency bands, etc. It is expected that the speed and throughput can be increased by at least four times compared with an existing IEEE802.11ax standard. Its main application scenarios are video transmission, augmented reality (AR), virtual reality (VR), etc.

The aggregation and coordination of multiple frequency bands mean that devices communicate with each other in frequency bands of 2.4GHz, 5.8GHz, and 6 to 7GHz at the same time. For the simultaneous communication among devices in multiple frequency bands, a new media access control (MAC) mechanism needs to be defined to manage it. In addition, low-latency transmission is expected to be supported in the IEEE802.11be standard.

In the IEEE802.11be standard, a maximum bandwidth to be supported is 320MHz (160MHz+160MHz), in addition to 240MHz (160MHz+80MHz) and the bandwidth supported in the IEEE802.11ax standard.

In the existing standard, a station (STA) and an access point (AP) can enter a power saving mode (also called a doze mode) after negotiation. That is, in the data communication process between the STA and the AP, after the STA receives or sends the last data frame, a power management sub-field of a MAC header of a response frame or the last data frame sent to the AP is set to "1", which indicates that the STA enters the power saving mode.

In the existing standard, the STA in the power saving state can obtain data by monitoring a traffic indication map (TIM) message frame in a beacon frame, but these mechanisms can only be applied in a single link.

In the IEEE802.11be standard, there may be multiple links between the STA and the AP for communication. The mechanisms described above are only applicable to the operation on the single link, and may not be applicable to communication on multiple links.

### SUMMARY

Aspects of the disclosure will at least solve the above problems and/or deficiencies. Various embodiments of the disclosure provide the following technical solutions.

According to a first aspect of the disclosure, a method for communication on multiple links is provided. The method includes: determining a first message frame, in which the first message frame includes wake-up information for indicating a wake-up state of one or more links, and the wake-up information is configured to identify to wake up a corresponding link to receive a cached downlink data frame; and sending the first message frame.

According to some embodiments, the wake-up information includes a wake-up identification bit.

According to some embodiments, the wake-up information includes respective first link identifiers corresponding to the multiple links.

According to some embodiments, the wake-up information includes a second link set identifier corresponding to a link set.

According to some embodiments, the wake-up information is carried in a MAC frame header portion of the first message frame.

According to some embodiments, the method further includes: in response to a downlink data frame being cached on a link in a doze state, setting the wake-up identification bit to a first value, for indicating a presence of a link that needs to be woken up.

According to some embodiments, the method further includes: setting an identifier corresponding to a link that needs to be woken up in the first link identifiers or the second link set identifier to a second value, for waking up the corresponding link.

According to some embodiments, the method further includes: receiving a second message frame on a link that is woken up; and sending the cached downlink data frame over the link that is woken up in response to the second message frame.

According to some embodiments, the first message frame includes a data frame and/or a management frame.

According to a second aspect of the disclosure, a communication method is provided. The method includes: receiving a first message frame, in which the first message frame includes wake-up information for indicating a wake-up state of one or more links, and the wake-up information is configured to identify to wake up a corresponding link to receive a cached downlink data frame; and waking up the corresponding link based on the wake-up information.

According to some embodiments, the method further includes: sending a fourth message frame, in which the fourth message frame includes doze information for indicating a doze state of one or more links.

According to a third aspect of the disclosure, a communication method is provided. The method includes: determining a third message frame, in which the third message frame includes doze information for indicating a doze state of one or more links; and sending the third message frame.

According to some embodiments, the doze information includes a power management identifier.

According to some embodiments, the doze information includes respective third link identifiers corresponding to the multiple links.

According to some embodiments, the doze information includes a fourth link set identifier corresponding to a link set.

According to some embodiments, the method further includes: setting the power management identifier to a third value, for indicating a need to enter a power saving mode.

According to some embodiments, the method further includes: setting an identifier corresponding to a link that needs to doze in the third link identifiers or the fourth link set identifier to a fourth value, for indicating the corresponding link in the power saving mode.

According to a fourth aspect of the disclosure, an apparatus for communication on multiple links is provided. The apparatus includes: a processing module and a sending module. The processing module is configured to determine a first message frame, in which the first message frame includes wake-up information for indicating a wake-up state of one or more links, and the wake-up information is configured to identify to wake up a corresponding link to receive a cached downlink data frame. The sending module is configured to send the first message frame.

According to a fifth aspect of the disclosure, an apparatus for communication on multiple links is provided. The apparatus includes: a receiving module and a processing module. The receiving module is configured to receive a first message frame, in which the first message frame includes wake-up information for indicating a wake-up state of one or more links, and the wake-up information is configured to identify to wake up a corresponding link to receive a cached downlink data frame. The processing module is configured to wake up the corresponding link based on the wake-up information.

According to a sixth aspect of the disclosure, an electronic device is provided. The electronic device includes: a memory, a processor, and computer programs stored on the memory and capable of running on the processor. When the computer programs are executed by the processor, the above method is implemented.

According to a seventh aspect of the disclosure, a computer readable storage medium having computer programs stored thereon is provided. When the computer programs are executed by a processor, the above method is implemented.

The embodiments of the disclosure provide the technical solutions to reduce the signaling overhead, so that devices are caused to communicate on multiple links, thereby increasing the network throughput.

### BRIEF DESCRIPTION OF THE DRAWINGS

The above and other features of the embodiments of the disclosure will be more apparent by describing the embodiments of the disclosure in detail with reference to the accompanying drawings, in which:
FIG. 1 is an exemplary diagram of communication on multiple links.
FIG. 2 is a flowchart of a communication method according to some embodiments of the disclosure.
FIG. 3 is a flowchart of a communication method according to some embodiments of the disclosure.
FIG. 4 is a flowchart of another communication method according to some embodiments of the disclosure.
FIG. 5 is a flowchart of another communication method according to some embodiments of the disclosure.
FIG. 6 is an exemplary schematic diagram of interactive communication according to some embodiments of the disclosure.
FIG. 7 is a block diagram of a communication apparatus according to some embodiments of the disclosure.
FIG. 8 is a block diagram of another communication apparatus according to some embodiments of the disclosure.

### DETAILED DESCRIPTION

The following description with reference to the accompanying drawings is provided to fully understand the various embodiments of the disclosure as defined by the appended claims and their equivalents. The various embodiments of the disclosure include various specific details, but such specific details are considered to be exemplary only. In addition, descriptions of well-known techniques, functions and constructions may be omitted for the sake of clarity and brevity.

Terms and words used in the disclosure are not limited to written meanings, but are used by inventors to enable a clear and consistent understanding of the disclosure. Therefore, for those skilled in the art, the description of various embodiments of the disclosure is provided only for the purpose of illustration, but not for the purpose of limitation.

It should be understood that "a", "an", "said", and "the" in singular forms used herein can also include plural forms, unless clearly indicated in the context otherwise. It should be further understood that the word "include" used in the disclosure refers to the existence of described features, integers, steps, operations, elements, and/or assemblies, but does not exclude the existence or addition of one or more other features, integers, steps, operations, elements, assemblies, and/or groups thereof.

It will be understood that although the terms "first" and "second" and the like can be used herein to describe various elements, these elements should not be limited by these terms. These terms are only used to distinguish one element from another. Therefore, a first element discussed below may be referred to as a second element without departing from the teaching of the embodiments.

It should be understood that when an element is referred to as being "connected" or "coupled" to another element, it may be directly connected or coupled to other elements, or intervening elements may also exist. In addition, as used herein, "connected" or "coupled" may include wireless connection or wireless coupling. The term "and/or" or the expression "at least one of..." used herein includes any and all combinations of one or more related listed items.

Unless otherwise defined, all terms used herein, including technical terms and scientific terms, have the same meaning as generally understood by those skilled in the art to which this disclosure belongs.

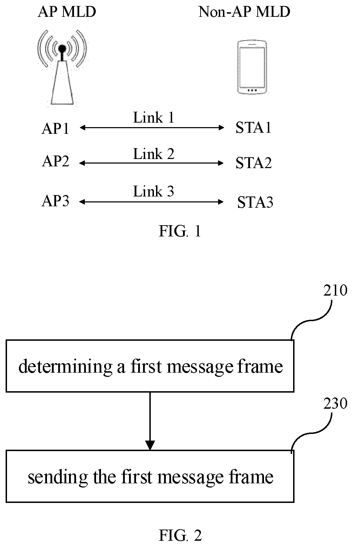

FIG. 1 is an exemplary diagram of communication on multiple links.

In a wireless local area network (WLAN), a basic service set (BSS) can include an access point (AP) and one or more stations (STAs) that communicate with the AP. A BSS can be connected to a distribution system (DS) through its AP, and then connected to another BSS, to form an extended service set (ESS).

The AP is a wireless switch used for the wireless network and is a core of the wireless network. The AP device can be used as a wireless base station and mainly used as a bridge to connect the wireless network and a wired network. With this AP, the wired and wireless networks can be integrated.

The AP may include software applications and/or circuitries to enable other types of nodes in the wireless network to communicate with outside and inside of the wireless network via the AP. For example, the AP can be a terminal device or a network device equipped with a wireless fidelity (Wi-Fi) chip.

For example, the STAs may include, but are not limited to: cellular phones, smart phones, wearable devices, computers, personal digital assistants (PDAs), personal communication system (PCS) devices, personal information managers (PIMs), personal navigation devices (PNDs), global positioning systems, multimedia devices, Internet of Things (IoT) devices, and the like.

In some embodiments of the disclosure, the AP and the STA may support a multi-link device (MLD), which may, for example, be denoted as AP MLD and Non-AP MLD, respectively. For ease of description, in the following context, example communication between an AP and an STA on multiple links is primarily described, which is not limited in some embodiments.

In FIG. 1, by way of illustration only, an AP MLD may be an AP supporting a multi-link communication function, and a Non-AP MLD may be an STA supporting a multi-link communication function. As illustrated in FIG. 1, the AP MLD may operate on three links, such as AP1, AP2, and AP3 illustrated in FIG. 1, and the Non-AP MLD may also operate on three links, such as STA1, STA2, and STA3. Although illustrated in FIG. 1, there are three links between the AP MLD and the Non-AP MLD, which is not limited in the disclosure, and there may be more or fewer links exist.

In FIG. 1, for example, AP1 communicates with STA1 via Link1, similarly, AP2 communicates with STA2 via Link2, and AP3 communicate with STA3 via Link3, respectively. In addition, Link1 to Link3 may be multiple links at different frequencies, e.g., links at 2.4 GHz, 5 GHz, and 6 GHz, etc. Moreover, there may be multiple channels on each link. However, it should be understood that the communication scenario in FIG. 1 is only exemplary and the invention concept is not limited thereto. For example, the AP MLD may be connected to multiple Non-AP MI,Ds, or the AP may communicate with other types of STAs on each link.

In the IEEE802. 1 1be standard, possible requirements for a device to enter a power saving mode and to obtain cached data frames may be sending an indication message on a particular link to indicate that itself or other links are in a doze state, or sending an indication message on a particular link to indicate that other links are in a wake-up state.

As mentioned above, since the above mechanism in the existing standard is only applied to operation on a single link, there is no specific description and definition of the power saving mode and obtaining the cached data frames in the IEEE 802.11be standard. Therefore, embodiments of the disclosure are redefined to enable wake up, doze, and/or obtaining cached data frames on multiple links.

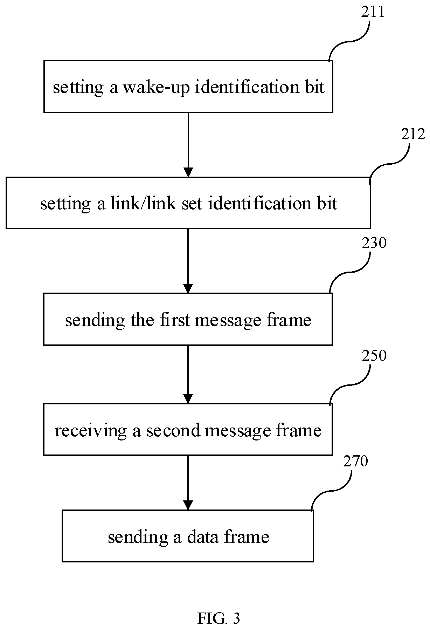

FIG. 2 and FIG. 3 are flowcharts of a communication method according to some embodiments of the disclosure. For example, FIG. 2 and FIG. 3 may be a communication method executed in an AP control device or an AP-side control device.

As illustrated in FIG. 2, at step 210, a first message frame is determined. For example, the first message frame may be determined by the AP on one of the multiple links it supports. For ease of description, it is assumed that the multiple links may be Link1 to Link3 as illustrated in FIG. 1. In an example, if STA1 and STA3 on Link1 and Link3 are in a doze state and STA2 on Link2 is in a wake-up state, and the AP caches data for STA1 and STA3 on Link1 and Link3, and the first message frame is determined on Link2. In another example, if STA1, STA2, and STA3 belong to the same Non-AP MLD and are all in the doze state, the first message frame is determined on a link that first enters the wake-up state. In another example, the first message frame may be a cached data frame if Link1 to Link3 are both in the doze state and are not woken up. In some embodiments, the first message frame may be determined based on the communication capability of the AP and the current communication environment. In other embodiments, the pre-stored or pre-written first message frame may be obtained directly. The first message frame may be a data frame or a trigger frame.

According to some embodiments, the first message frame may include wake-up information for indicating a wake-up state of one or more links. The wake-up state of the one or more links may indicate whether each of the one or more links needs to be wake up or not. In an example, the wake-up information in the first message frame may be used to indicate to wake up a corresponding link to receive a cached downlink data frame. That is, the first message frame may carry the wake-up information that is used to wake up a link in a doze state to receive the cached downlink data frame. In an example, if the AP has cached the downlink data frame on a link in a doze state, it needs to wake up the corresponding link. In another example, the AP may selectively wake up the corresponding link based on the load of each link and uplink and downlink access time delay, or convert the cached data on a link with high load and high access time delay to a link with low load and low access time delay. Therefore, there is a need to wake up such link with low load and low access time delay, and these can be internal operations of the AP.

For example, there may be multiple links established between the AP MLD and the Non-AP MLD, and the Non-AP MLD enters the power saving mode on some links. In the following context, the power saving mode and the doze state are used interchangeably. When the AP MLD is communicating with the Non-AP MLD on one link and the downlink data frame of the Non-AP MLD is cached on other links, the other links need to be woken up if they are in the power saving mode and may not receive the cached downlink data frame.

For example, the AP MLD and the Non-AP MLD may communicate data on a link (an activated link in a wake-up state), and the AP MLD has cached the downlink data frame for the Non-AP MLD on a certain link/some links. Since the AP needs to wake up the certain link/some links in the power saving mode, the AP may send the wake-up information carried in the header portion of the data frame and/or the management frame sent on the activated link in the wake-up state to wake up the STA on the certain link/some links. For example, in combination with FIG. 1, when data communication is performed on Link1 (i.e., Link1 is an activated link in a wake-up state), the links in the power saving mode may be Link2 and Link3 in FIG. 1, and the wake-up information may be carried in the first message frame and sent on Link1 to wake up Link2 and Link3.

According to some embodiments of the disclosure, the first message frame may be a data frame and/or a management frame, which is not limited in the disclosure. The first message frame may be any other types of frames depending on the communication environment. In addition, the wake-up information may be carried in the MAC frame header portion of the first message frame. That is, the wake-up information can be set both in the data frame and the management frame. In addition, if all links are in the doze state, the wake-up information can be carried in the frame header portion of the cached data frame, i.e., the first message frame corresponds to the cached data frame.

According to some embodiments, the format of the wake-up information can be as illustrated in Table 1 below.

**Table 1**

| | | | | | |
|---|---|---|---|---|---|
| Wake up | Link1 | Link2 | Link3 | Link4 | ...... |

As illustrated in Table 1, the wake-up information in the first message frame includes a wake-up identification bit (Wake up). In addition, the wake-up information may include respective first link identifiers corresponding to the multiple links (e.g., Link1 to Link4). When a link needs to be woken up, the wake-up identification bit (Wake up) may be set to "1" ("0" for other cases), the first link identifier corresponding to the link that needs to be woken up is set to "1", and the first link identifier corresponding to the link that does not need to be woken up is set to "0". According to some embodiments, when the AP caches the downlink data frame on a link in a doze state, it needs to wake up the link in the doze state. According to another example, the AP may selectively wake up the corresponding link based on the load of each link and uplink and downlink access time delay, or convert the cached data on a link with high load and high access time delay to a link with low load and low access time delay. Therefore, there is a need to wake up such link with low load and low access time delay. This is only exemplary and is not limited to embodiments of the disclosure.

For example, the wake-up identification bit (Wake up) and each of the first link identifiers may include a plurality of bits, and the wake-up identification bit (Wake up) may indicate a presence of a link to be woken up and/or a wake-up state of each link, and the first link identifier may indicate an identification number of the corresponding link. In this example, the highest valid bit of the wake-up identification bit (Wake up) may indicate the presence of the link to be woken up, the other bits correspond to the wake-up state of each link, and each first link identifier may indicate the identification number of the corresponding link.

Further, although the wake-up information in Table 1 may include the wake-up identification bit (Wake up) and the first link identifiers (e.g., Link1 to Link4), which is not limited in the disclosure. For example, the wake-up information may include only one of the wake-up identification bit (Wake up) and the first link identifier. When the wake-up information includes only the wake-up identification bit (Wake up), multiple bits may be used to represent the wake-up identification bit (Wake up), and each bit may correspond to a corresponding link. For example, the wake-up identification bit (Wake up) may be set to 01100, which indicates only Link3 and Link4 need to be woken up, and the remaining links do not need to be woken up.

In addition, the first link identifiers in Table 1 may include identifiers of all links between the AP and the STA, or it may include the identifiers of only those links that need to be woken up.

In some embodiments, the first message frame may be the cached data frame, and the cached data frame may include a more data field. In some embodiments, the more data field may indicate the wake-up state in combination with the wake-up information in Table 1. For example, the more data field may be set to 1 to indicate that there will be data transmission, the wake-up identification bit may be set to 1 and the link to be woken up may be set in the first link identifiers, so that the wake-up information together with the more data field can cause the link in the power saving mode to wake up, so as to obtain the cached downlink data frame.

In other embodiments, the format of the wake-up information may be as illustrated in Table 2 below.

**Table 2**

| | | |
|---|---|---|
| Wake up | Link set | ...... |

Different from Table 1, the wake-up information in Table 2 may include a second link set identifier corresponding to a link set. In an example, all the links between the AP MLD and the Non-AP MLD can be divided into different sets, and the wake-up state of each link can be represented in Table 2 as one or more sets. In other examples, only the links that need to be woken up can be represented as one or more sets in the form of link sets respectively. In an example, Link1 to Link3 in FIG. 1 can be set as a set and the set corresponds to Link set in Table 2. If Link2 and Link3 need to be woken up, the second link set identifier in Table 2 can be set to 011 and the wake-up identification bit (Wake up) can be set to 1. In another example, since the first link set 1 does not need to be woken up, Link2 and Link3 that need to be woken up can be set as a link set and identified in the link set.

It is understood that the above description is only exemplary and is not limited in the disclosure. Similar to the description of Table 1, the wake-up information of Table 2 may also include only one of the wake-up identification bit (Wake up) and the second link set identifier. For brevity, the repetitive description is omitted herein.

As illustrated in FIG. 2, at step 230, the first message frame is sent. In an example, the first message frame may be sent on a link that is not in a doze state (a link that is woken up) among the multiple links between the AP MLD and the Non-AP MLD, and the corresponding link may be woken up to receive the cached data frame based on the wake-up information in the first message frame. In another example, if all the links are in the doze state, the first message frame is sent on the link that first enters the wake-up state. In another example, if all links are in the doze state and are not woken up, the first message frame may correspond to the cached data frame and the wake-up information is carried in the cached data frame, so that the cached data frame and the wake-up information included therein can be transmitted directly on the link that is woken up when the corresponding link is woken up actively.

As illustrated in FIG. 3, the communication method according to some embodiments of the disclosure may include step 211. At step 211, in response to a downlink data frame being cached on a link in a doze state, the wake-up identification bit is set to a first value, for indicating a presence of a link that needs to be woken up.

The communication method according to some embodiments of the disclosure may include step 212. At step 212, an identifier corresponding to a link that needs to be woken up in the first link identifiers or the second link set identifier is set to a second value, for waking up the corresponding link.

In FIG. 3, step 211 of setting the wake-up identification bit and step 212 of setting the first link identifier or the second link set identifier may be sub-steps of determining the first message frame (e.g., step 210 of FIG. 2). Further, with reference to the above described in Tables 1 and 2, step 211 and step 212 in FIG. 3 may be combined or one of them may be omitted. For example, the first value and the second value may correspond to "1" as described above, which is only exemplary and is not limited in the disclosure, and any other possible way may be used.

At step 230 of FIG. 3, the first message frame is sent. Step 230 of FIG. 3 may be similar to step 230 of FIG. 2, and the repetitive description is omitted for brevity.

As illustrated in FIG. 3, at step 250, a second message frame is received. In detail, the second message frame may be received on a link that is woken up. The second message frame may be a response frame for the wake-up information sent, to inform the AP that the corresponding link is woken up. For example, the second message frame may be a Null-Poll frame. That is, when the Non-AP MLD receives the first message frame, it wakes up the corresponding link based on the wake-up information in the first message frame, and the Null-Poll frame may be sent on the corresponding link, so that the AP may receive the second message frame (e.g., the Null-Poll frame) on the link that is woken up.

At step 270, the AP may send the cached downlink data frame over the link that is woken up in response to the second message frame. If the received second message frame indicates that the corresponding link has been woken up, the corresponding cached data can be sent over it.

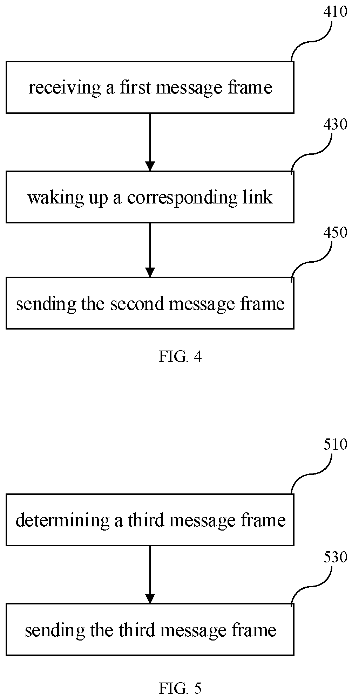

FIG. 4 is a flowchart of another communication method according to some embodiments of the disclosure. FIG. 4 may be a communication method performed in the STA or in any STA side control device.

As illustrated in FIG. 4, at step 410, a first message frame is received. The first message frame includes wake-up information for indicating a wake-up state of one or more links, and the wake-up information is configured to identify to wake up a corresponding link to receive a cached downlink data frame.

According to some embodiments, the wake-up information is carried in a MAC frame header portion of the first message frame.

According to some embodiments, the wake-up information includes a wake-up identification bit.

According to some embodiments, the wake-up information includes respective first link identifiers corresponding to the multiple links.

According to some embodiments, the wake-up information includes a second link set identifier corresponding to a link set.

That is, the wake-up information in the first message frame received at step 410 may have the format in Table 1 and Table 2 above, and the repetitive description is omitted here for brevity.

At step 430, the corresponding link is woken up based on the wake-up information. For example, information about the link that needs to be woken up can be obtained based on the wake-up information, and the link that needs to be woken up can be switched from the power saving mode to the wake-up mode.

At step 450, a second message frame may be sent on the corresponding link that is woken up. The second message frame may be a response frame, e.g., a Null-Poll frame for notifying the AP that the corresponding link has been woken up.

The steps in FIG. 4 are exemplary only, which is not limited in the disclosure. For example, the communication method illustrated in FIG. 4 may further include: sending a fourth message frame, in which the fourth message frame includes doze information for indicating a doze state of one or more links. The fourth message frame described herein may be similar to the doze information (e.g., Table 3 and Table 4) to be described below with reference to FIG. 5.

FIG. 5 is a flowchart of another communication method according to some embodiments of the disclosure.

As illustrated in FIG. 5, at step 510, a third message frame is determined. The third message frame may include doze information for indicating a doze state of one or more links. That is, the third message frame may include information about whether each of the one or more links is in the doze state.

In an example, the third message frame may be a feedback frame, a data frame, and/or a management frame. The doze information may be carried in the MAC frame header portion of the third message frame. In another example, the third message frame may be a newly defined type of management frame that carries doze information of one or more links.

According to some embodiments, the format of the doze information may be as illustrated in Table 3 below.

**Table 3**

| | | | | | |
|---|---|---|---|---|---|
| Power management | Link1 | Link2 | Link3 | Link4 | ...... |

As illustrated in Table 3, the doze information in the third message frame may include a power management identifier. In addition, the doze information may include: third link identifiers corresponding to the multiple links (Link1 to Link4).

In an example, after data have been received or multiple links have been established, some links of the Non-AP MLD need to enter the power saving mode, which can be represented using the information bits in Table 3 (sent on any link). If the power saving mode is required, the power management subfield can be set to "1" ("0" for other cases), the third link identifiers corresponding to the links that needs to enter the power saving mode are set to "1", and the third link identifiers for links that do not need to enter the power saving mode are set to "0", which is only exemplary and is not limited in the disclosure.

According to some embodiments, the third link identifiers of the doze information in Table 3 may include the identifiers of all the links between the AP and the STA, or it may include only the identifiers of the links that need to enter the power saving mode.

For example, the power management subfield and each third link identifier may include a plurality of bits, and the power management subfield may indicate whether a link needs to enter the power saving mode and/or the doze state of each link, and each third link identifier may indicate the identification number of the corresponding link. In an example, the highest valid bit of the power management subfield may indicate the presence of the link that needs to enter the power saving mode, each of the other bits in the power management identifier corresponds to the doze state of each link, and each third link identifier may indicate the identification number of the corresponding link.

In addition, the doze information in Table 3 may include the power management identifier and the third link identifiers (e.g., Link1 to Link4), which is not limited in the disclosure. For example, the doze information may include only one of the power management identifier and the third link identifier. When the doze information includes only the power management identifier, multiple bits may be used to represent the power management identifier, and each bit may correspond to a corresponding link. For example, the power management identifier may be set to 011, which indicates that Link1 and Link2 are in the power saving mode.

In other embodiments, the format of the doze information may be as illustrated in Table 4 below.

**Table 4**

| | | |
|---|---|---|
| Power management | Link set | ...... |

Different from Table 3, the doze information in Table 4 includes a fourth link set identifier corresponding to a link set. In an example, all the links between AP MLD and the Non-AP MLD can be divided into different sets, and the links in the doze state are represented as a set in Table 4. In other examples, only the links that need to be woken up can be represented as one or more sets in the form of link sets, respectively. For example, Link1 and Link2 in FIG. 1 may be set as a set corresponding to the fourth link set identifier Link set 1 in Table 4, and Link3 in FIG. 1 may correspond to the fourth link set identifier Link set 2. In the case where the lower bit in Link set 1 corresponds to Link 1, if Link set 1 is set to 11 and Link set 2 is set to 0, Link1 and Link2 enter the power saving mode, while Link3 does not enter the power saving mode. In this example, Link3 does not enter the power saving mode, so the doze information in Table 4 does not include Link set 2. Similar to what is described in Table 3, the doze information of Table 4 may also include only one of the power management identifier and the fourth link set identifier. For brevity, repeated descriptions are omitted herein.

According to some embodiments, the communication method in FIG. 5 may further include: setting the power management identifier to a third value, for indicating a need to enter a power saving mode. That is, the power management identifier may be used to indicate a presence of a link that needs to enter the power saving mode.

According to some embodiments, the communication method in FIG. 5 may further include: setting an identifier corresponding to a link that needs to doze in the third link identifiers or the fourth link set identifier to a fourth value, for indicating the corresponding link in the power saving mode.

The steps described above for setting the power management identifier and the steps for setting the third link identifiers or the fourth link set identifier may be sub-steps of determining the third message frame (e.g., step 510 of FIG. 5). For example, as described with reference to Tables 3 and 4, the third value and the fourth value may correspond to "1", which is only exemplary and is not limited in the disclosure. Any other feasible method can also be used.

At step 530, the determined third message frame may be sent to notify the AP of the doze state of the multiple links.

For example, the Non-AP MLD can carry the doze information in the MAC frame header of a feedback frame or a data frame on any of the multiple links to indicate that other links or this link (the link that sends the third message frame) enter the power saving mode.

The communication method in FIG. 5 may send or update the doze state to the AP after performing the waking up process in FIG. 2 and FIG. 3, or may actively report the doze state to the AP after the multiple links are established or at any other suitable time points, etc. In an example, the third message frame may be sent on any link if the doze state is actively reported to the AP after the multiple links are established. In another example, the third message frame may be sent on a link that is woken up if the doze state is sent or updated to the AP after the link is woken up.

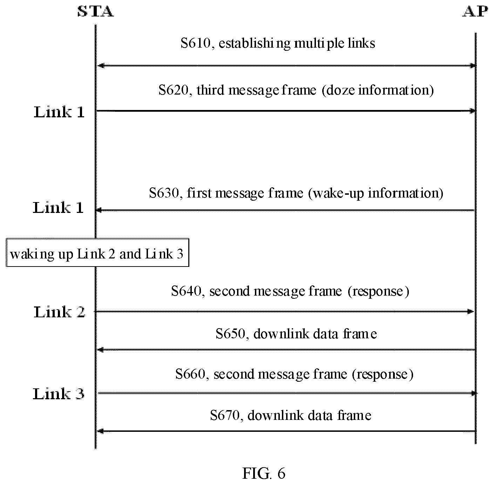

For example, FIG. 6 illustrates an example of interactive communication in which the STA actively reports the doze state to the AP after establishing the multiple links.

For the sake of description, in FIG. 6, it is assumed that there are three links between the STA and the AP as illustrated in FIG. 1, the STA and the AP can communicate with each other on Link1, and Link2 and Link3 are in the power saving mode after establishing the multiple links.

As illustrated in FIG. 6, at step S610, multiple links may be established between the STA and the AP. For example, multiple links may be established by broadcasting a beacon frame, and the specific description of establishing multiple links is omitted in this disclosure to avoid obscuring the technical contemplation of the disclosure.

At step S620, the STA may send the third message frame to the AP on Link1. The third message frame may include the doze information in Table 3 or Table 4. The doze information may indicate that Link2 and Link3 are in the power saving mode.

When the AP has cached the downlink data frame for the STA on Link2 and Link3, at step S630, the AP may send the first message frame to the STA, and the first message frame may include the wake-up information as illustrated in Table 1 and Table 2. For example, the wake-up information may be used to wake up Link2 and Link3 to transmit the cached data frame to the corresponding STA 2 and STA 3.

When Link2 and Link3 are woken up, at steps S640 and S660, the STA may send the second message frame on Link2 and Link3 respectively to notify the AP that the corresponding link is woken up.

When the AP receives the second message frame, at steps S650 and S670, the AP may send the cached downlink data frame on Link2 and Link3, respectively.

Steps S640 to S670 in FIG. 6 may be performed in parallel or serially. In addition, steps S610 to S670 in FIG. 6 may be performed in any other suitable order.

In the communication method described with reference to FIG. 2 to FIG. 6, the same device supporting communication on multiple links is capable of communicating over any of the multiple links, which causes the remaining links to enter the power saving mode or to obtain cached downlink data frames. In addition, the communication method described with reference to FIG. 2 to FIG. 6 enables the setting of wake up/doze states of the multiple links and the transmission of cached data, which reduces the signaling overhead and enables the device to communicate on the multiple links, thereby improving the network throughput.

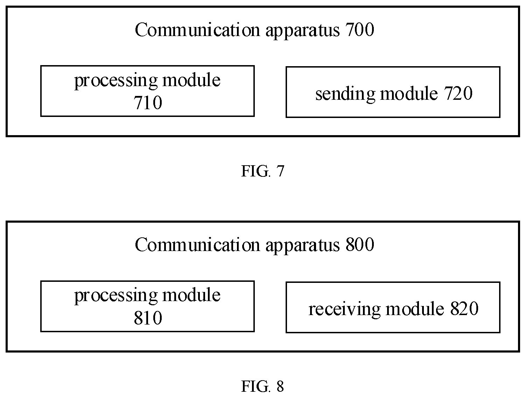

FIG. 7 is a block diagram of a communication apparatus 700 according to some embodiments of the disclosure.

The communication apparatus 700 includes: a processing module 710 and a sending module 720.

The processing module 710 is configured to determine a first message frame, in which the first message frame includes wake-up information for indicating a wake-up state of one or more links, and the wake-up information is configured to identify to wake up a corresponding link to receive a cached downlink data frame. The sending module 720 is configured to send the first message frame.

According to some embodiments, the wake-up information includes a wake-up identification bit.

According to some embodiments, the wake-up information includes respective first link identifiers corresponding to the multiple links.

According to some embodiments, the wake-up information includes a second link set identifier corresponding to a link set.

According to some embodiments, the wake-up information is carried in a MAC frame header portion of the first message frame.

According to some embodiments, the first message frame includes a data frame and/or a management frame.

According to some embodiments, the processing module 710 is further configured to: in response to a downlink data frame being cached on a link in a doze state, set the wake-up identification bit to a first value, for indicating a presence of a link that needs to be woken up.

According to some embodiments, the processing module 710 is further configured to: set an identifier corresponding to a link that needs to be woken up in the first link identifiers or the second link set identifier to a second value, for waking up the corresponding link.

Although the communication apparatus 700 illustrated in FIG. 7 includes only the processing module 710 and the sending module 720. However, it is understood that the communication apparatus 700 may also include more or fewer other modules. For example, the communication apparatus 700 may also include a receiving module (not shown).

According to some embodiments, the receiving module may be configured to: receive a second message frame on a link that is woken up. In some embodiments, the sending module 720 sends the cached downlink data frame over the link that is woken up in response to the second message frame.

The communication apparatus 700 in FIG. 7 may perform the communication method described with reference to FIG. 2 and FIG. 3, and the repetitive description of which is omitted herein for brevity.

FIG. 8 is a block diagram of another communication apparatus 800 according to some embodiments of the disclosure.

As illustrated in FIG. 8, the communication apparatus 800 includes: a receiving module 810 and a processing module 820.

The receiving module 810 is configured to receive a first message frame, in which the first message frame includes wake-up information for indicating a wake-up state of one or more links, and the wake-up information is configured to identify to wake up a corresponding link to receive a cached downlink data frame. The processing module 820 is configured to wake up the corresponding link based on the wake-up information.

According to some embodiments, the wake-up information includes a wake-up identification bit.

According to some embodiments, the wake-up information includes respective first link identifiers corresponding to the multiple links.

According to some embodiments, the wake-up information includes a second link set identifier corresponding to a link set.

According to some embodiments, the wake-up information is carried in a MAC frame header portion of the first message frame.

According to some embodiments, the first message frame includes a data frame and/or a management frame.

The wake-up information may have the format described in Table 1 or Table 2, and the repetitive description is omitted herein for brevity.

Although the communication apparatus 800 illustrated in FIG. 8 includes only the receiving module 810 and the processing module 820. However, it is understood that the communication apparatus 800 may also include more or fewer other modules. For example, the communication apparatus 800 may also include a sending module (not shown).

According to some embodiments, the sending module is further configured to: send a second message frame to notify an AP that the corresponding link is woken up. According to some embodiments, the sending module may further be configured to: send a fourth message frame, in which the fourth message frame includes doze information for indicating a doze state of one or more links.

The communication apparatus 800 in FIG. 8 may perform the communication method described with reference to FIG. 4, and the repetitive description is omitted herein for brevity.

In addition, the communication apparatus 800 in FIG. 8 may also perform the communication method described with reference to FIG. 5. In detail, the processing module 820 may be configured to determine a third message frame. The third message frame includes doze information for indicating a doze state of one or more links. The sending module (not shown) may be configured to send the third message frame.

According to some embodiments, the doze information includes a power management identifier.

According to some embodiments, the doze information includes respective third link identifiers corresponding to the multiple links.

According to some embodiments, the doze information includes a fourth link set identifier corresponding to a link set.

According to some embodiments, the processing module 820 is further configured to set the power management identifier to a third value, for indicating a need to enter a power saving mode.

According to some embodiments, the processing module 820 is further configured to set an identifier corresponding to a link that needs to doze in the third link identifiers or the fourth link set identifier to a fourth value, for indicating the corresponding link in the power saving mode.

The doze information may have the format described in Table 3 or Table 4, and the repetitive description is omitted herein for brevity.

In the communication apparatus described in FIG. 7 and FIG. 8, the same device supporting communication on multiple links is capable of communicating over any of the multiple links, which causes the remaining links to enter the power saving mode or to obtain cached downlink data frames. The communication apparatus described in FIG. 7 and FIG. 8 enables the setting of wake up/doze states of the multiple links and the transmission of cached data, which reduces the signaling overhead and enables the device to communicate on the multiple links, thereby improving the network throughput.

Based on the same principles as the method provided in embodiments of the disclosure, the embodiments of the disclosure also provide an electronic device. The electronic device includes a processor and a memory having machine readable instructions (which may also be referred to as "computer programs") stored thereon. When the machine readable instructions are executed by the processor, the method described with reference to FIG. 2 to FIG. 6 is implemented.

The embodiments of the disclosure also provide a computer-readable storage medium having computer programs stored thereon. When the computer programs are executed by a processor, the method described with reference to FIG. 2 to FIG. 6 is implemented.

In some embodiments, the processor may be a logic box, a module, or a circuit, for implementing or executing various embodiments described in the disclosure, for example, a central processing unit (CPU), a general processor, a digital signal processor (DSP), an application specific integrated circuit (ASIC), a field programmable gate array (FPGA) or other programmable logic devices, a transistor logic device, a hardware component, or any combination thereof. The processor may also be a combination used to implement a computing function, for example, a combination consisting of one or more microprocessors, and a combination consisting of DSPs and microprocessors.

In some embodiments, the memory may be, for example, a read only memory (ROM), a random access memory (RAM), an electrically erasable programmable read only memory (EEPROM), a compact disc read only memory (CD-ROM) or other optical disc memories, optical disk memories (including compact disc, laser disc, CD-ROM, digital general disc, and Blu-ray disc), disk storage mediums or other magnetic storage devices, or any other medium that can be used to carry or store program codes in the form of instructions or data structures and can be accessed by a computer, which is not limited herein.

It should be understood that although steps in the flowchart of the accompanying drawings are shown sequentially as indicated by the arrows, the steps are not necessarily performed sequentially in the order indicated by the arrows. Unless explicitly stated otherwise in the disclosure, there is no strict sequential limitation on the execution of these steps, which may be performed in any other order. In addition, at least some of the steps in the flowchart of the accompanying drawings may include a plurality of sub-steps or a plurality of phases, which are not necessarily executed at the same time, but may be executed at different times. The execution order is not necessarily sequential, and the steps can be performed alternately or alternatively with other steps or at least part of sub-steps or phases of other steps.

Although the disclosure has been shown and described with reference to the embodiments of the disclosure, it will be understood by those skilled in the art that various changes in form and detail can be made without departing from the scope of the disclosure. Accordingly, the scope of the disclosure should not be limited by the embodiments, but should be defined by the appended claims and their equivalents.

## Claims

1. A method for communication on multiple links, comprising:
determining a first message frame, wherein the first message frame comprises wake-up information for indicating a wake-up state of one or more links, and the wake-up information is configured to identify to wake up a corresponding link to receive a cached downlink data frame; and
sending the first message frame.

2. The method of claim 1, wherein the wake-up information comprises a wake-up identification bit.

3. The method of claim 1, wherein the wake-up information comprises respective first link identifiers corresponding to the multiple links.

4. The method of claim 1, wherein the wake-up information comprises a second link set identifier corresponding to a link set.

5. The method of any one of claims 1-4, wherein the wake-up information is carried in a media access control (MAC) frame header portion of the first message frame.

6. The method of claim 2, further comprising:
in response to a downlink data frame being cached on a link in a doze state, setting the wake-up identification bit to a first value, for indicating a presence of a link that needs to be woken up.

7. The method of claim 3 or 4, further comprising:
setting an identifier corresponding to a link that needs to be woken up in the first link identifiers or the second link set identifier to a second value, for waking up the corresponding link.

8. The method of claim 7, further comprising:
receiving a second message frame on a link that is woken up; and
sending the cached downlink data frame over the link that is woken up in response to the second message frame.

9. The method of claim 1, wherein the first message frame comprises a data frame and/or a management frame.

10. A method for communication on multiple links, comprising:
receiving a first message frame, wherein the first message frame comprises wake-up information for indicating a wake-up state of one or more links, and the wake-up information is configured to identify to wake up a corresponding link to receive a cached downlink data frame; and
waking up the corresponding link based on the wake-up information.

11. The method of claim 10, wherein the wake-up information comprises a wake-up identification bit.

12. The method of claim 10, wherein the wake-up information comprises respective first link identifiers corresponding to the multiple links.

13. The method of claim 10, wherein the wake-up information comprises a second link set identifier corresponding to a link set.

14. The method of any one of claims 10-13, wherein the wake-up information is carried in a media access control (MAC) frame header portion of the first message frame.

15. The method of claim 10, further comprising: sending a fourth message frame, wherein the fourth message frame comprises doze information for indicating a doze state of one or more links.

16. A method for communication on multiple links, comprising:
determining a third message frame, wherein the third message frame comprises doze information for indicating a doze state of one or more links; and
sending the third message frame.

17. The method of claim 16, wherein the doze information comprises a power management identifier.

18. The method of claim 16, wherein the doze information comprises respective third link identifiers corresponding to the multiple links.

19. The method of claim 16, wherein the doze information comprises a fourth link set identifier corresponding to a link set.

20. The method of claim 17, further comprising:
setting the power management identifier to a third value, for indicating a need to enter a power saving mode.

21. The method of claim 18 or 19, further comprising: setting an identifier corresponding to a link that needs to doze in the third link identifiers or the fourth link set identifier to a fourth value, for indicating the corresponding link in the power saving mode.

22. An apparatus for communication on multiple links, comprising:
a processing module, configured to determine a first message frame, wherein the first message frame comprises wake-up information for indicating a wake-up state of one or more links, and the wake-up information is configured to identify to wake up a corresponding link to receive a cached downlink data frame; and
a sending module, configured to send the first message frame.

23. An apparatus for communication on multiple links, comprising:
a receiving module, configured to receive a first message frame, wherein the first message frame comprises wake-up information for indicating a wake-up state of one or more links, and the wake-up information is configured to identify to wake up a corresponding link to receive a cached downlink data frame; and
a processing module, configured to wake up the corresponding link based on the wake-up information.

24. An electronic device, comprising: a memory, a processor, and computer programs stored on the memory and capable of running on the processor, wherein when the computer programs are executed by the processor, the method of any one of claims 1-21 is implemented.

25. A computer readable storage medium having computer programs stored thereon, wherein when the computer programs are executed by a processor, the method of any one of claims 1-21 is implemented.
